# EUROPEAN PATENT SPECIFICATION

(11) **EP 2 398 311 B1**
(45) Date of publication and mention of the grant of the patent: **08.05.2013**
(21) Application number: 10703999.2
(22) Date of filing: 12.02.2010
(51) Int. Cl.: A01K 1/01, B08B 1/02, B08B 1/04

(54) **DEVICE FOR DISPLACING MATERIAL LYING ON A FLOOR**
VORRICHTUNG ZUR ENTFERNUNG VON AUF EINEM BODEN LIEGENDEM MATERIAL
DISPOSITIF POUR DEPLACER UN MATERIAU SUR UN SOL

(30) Priority: 17.02.2009 NL 1036587
(43) Date of publication of application: 28.12.2011
(73) Proprietor: Lely Patent N.V., 3147 PA Maassluis (NL)
(72) Inventor: VAN DEN BERG, Karel, NL-2971 VB Bleskensgraaf (NL)
(74) Representative: Jennen, Peter Leonardus Hendricus
(86) International application number: PCT/NL2010/000023
(87) International publication number: WO 2010/095928

(56) References cited:
- WO-A-00/70935
- WO-A-00/70936
- WO-A-00/70938
- WO-A-2005/055796
- DE-A1- 10 309 106
- DE-A1-102004 010 827
- DE-U-202006 001 258
- DE-U-202006 007 378
- US-A1- 2006 190 134
- US-A1- 2006 236 492

## Description

### BACKGROUND OF THE INVENTION

The invention relates to an unmanned self-propelled device, provided with a brush, for displacing material present on a stable floor, such as manure or feed. The invention also relates to a method of displacing material present on a stable floor.

DE 20 2006 007378 discloses an unmanned self-propelled device, comprising a pair of wheels and a manure slide (also called scraper), which also forms a front wall for a chamber which accommodates a brush arrangement. The brush arrangement comprises a series of cleaning fingers which are freely rotatable about a horizontal axis which is transverse to the direction of travel. The fingers are intended to extend into transverse slots of the floor in order to clean these slots.

DE 20 2006 001258 shows a device, provided with a drive and a control, for displacing manure, wherein a number of rotatingly driven brushes are arranged behind a manure slide (scraper), wherein the axes of rotation are parallel to the direction of travel, in order to be able to extend into transverse slots of the floor by means of the brush bristles. WO-A-00/70938 discloses an unomanned vehicle with manure displacing means comprising a manure slide and/or a brush. Pressore setting means may be provided for setting the pressure with which the manure displacing means press on the floor.

The known devices are less applicable for combatting film formation on a stable floor or removing a film which has been formed on a stable floor.

### SUMMARY OF THE INVENTION

It is an object of the invention to provide a device and/or method of the type mentioned in the preamble, by means of which film formation on a stable floor can be combatted effectively.

It is an object of the invention to provide a device and/or method of the type mentioned in the preamble, by means of which the removal of film formed on a stable floor is facilitated.

It is an object of the invention to provide a device and/or method of the type mentioned in the preamble, by means of which multifunctional adaptation to conditions on the floor is possible.

In order to achieve at least one of these objects, the invention, from one aspect, provides an assembly for displacing manure present on a stable floor, comprising an unmanned self-propelled device having a frame, wherein the frame is provided with a slide for displacing the manure and with at least one brush, wherein the assembly further comprises setting means for automatically and selectively setting the intensity of the contact of the brush with the floor. This makes it possible to influence the functionality of the brush automatically and thus efficiently.

In a further development thereof, the setting means are configured to set the intensity of the contact of the brush with the floor in dependence on the condition of the floor and/or of the surroundings (in particular climate parameters, such as temperature, moisture and air pressure) and/or of the travelling (speed and/or direction) of the device, so that the brush can be active in an optimum manner in adaptation thereto. For detecting one or more of said conditions, the assembly can be provided with detectors which can be mounted on the device or be mounted in or near the stable floor and then communicate in a wireless manner with a control unit on the device.

The assembly can be provided with a control unit which controls the setting means and which is provided with means for pre-programming the operation of the setting means in relation to the condition detected by the detectors. This makes it possible for the farmer to pre-control the operation of the setting means according to his experience. When detecting the conditions on the floor and/or surroundings, it is possible for the setting means, for example when the operation is started, to make a setting which can then be maintained during a period of time, for example a part of a day, or, if desired, can be changed automatically if the measured condition changes to a certain extent. In the case of adaptation to the travelling, the change will take place during operation.

For detecting manure and the like on the floor, use can be made of a detector which is configured to detect material present on the floor, preferably in 2D or 3D form and/or dimensions.

Use can be made of a detector which is configured to detect the temperature of the surface of the floor and/or of the space immediately above the floor. By means thereof it is, for example, possible to detect a hot floor, and to adapt the intensity of the contact of the brush with the floor thereto. If the detector is disposed on the device, it is also possible to detect, by means of an IR sensor, a local temperature change, for example a temperature rise as a result of a recently produced amount of urine or thin manure. The operation of the brush can then locally be adapted thereto.

Use can also be made of a detector which is configured to measure the moisture content on and/or above the floor.

In a further development of the assembly according to the invention, the brush is designed as a rotatable brush, wherein the device is provided with drive means for driving the rotatable brush, wherein the setting means comprise control means for the drive means for automatically and selectively controlling the number of revolutions and/or the direction of rotation of the brush. By thus automatically controlling the driven number of revolutions, for example from zero revolutions, in which case the brush can be in detained position or in clearance position, to a first specific number of revolutions, or from a first specific number of revolutions to a second specific number of revolutions, or from a number of revolutions in one direction to a number of revolutions in opposite direction of the rotating brush, adaptation to the actual condition on the floor can take place. In one embodiment, it is for example possible to decide to have the brushes operate in dry conditions (detected for example by the aforementioned moisture detector) at a higher number of revolutions than in wet conditions, in order thus to influence the intensity of the cleaning.

The brush can have a substantially horizontal rotational centre line. The rotational centre line can, for example, be parallel to the direction of travel, or be transverse thereto, as known per se.

The effectiveness of the brush can be enhanced if the control means are configured to control the number of revolutions in dependence on the speed of travel of the device. In a first further development thereof, the control means are configured to control the number of revolutions of the brush in such a manner that the circumferential speed at the lower side of the brush is equal to the speed of travel of the device but opposite in sign. The brush can then function as a bearing roller, in which case the brush will hardly be susceptible of wear. In a second, alternative further development thereof, the control means are configured to control the number of revolutions of the brush in such a manner that the circumferential speed at the lower side of the brush differs from the speed of travel of the device, is preferably greater, and opposite in sign. It is, for example, possible to effect more or less skid of the brush on the floor.

The control means can be configured to control the drive means for selective setting of the direction of rotation of the brush, for example selective setting of the direction of rotation of the brush in dependence on the direction of travel of the device. When the direction of travel is inversed, such as in the case of driving in reverse, the direction of rotation of the brush can be adapted thereto.

The control means can be configured to control the drive means for selective setting of the number of revolutions of the brush in dependence on the speed of travel of the device.

Adaptation to the condition of/on the floor is further enhanced if the setting means are configured to set the height of the brush with respect to the frame, so that a plurality of operative positions are possible.

Adaptation to the condition of/on the floor is also enhanced if the setting means are configured to set the pressure of the brush on the floor. This is, for example, possible in an embodiment in which the brush is fastened to a holder and is fastened therewith to the frame, wherein the holder is fastened to the frame at the location of an adjustable connection which forms part of the setting means. In particular, the adjustable connection can form a pivot point with a substantially horizontal rotational centre line and be adjustable in horizontal direction for setting the distance between the brush and the pivot point.

In a manner known per se the device can comprise a slide for displacing material present on a stable floor, wherein the brush is preferably arranged behind the slide when viewed in the direction of travel. The slide can be concave in top view, with the hollow side oriented forwardly.

The slide can be fastened to the holder at a location at the side of the adjustable connection which faces away from the brush. The slide and the brush can thus be interconnected by a holder, which holder is fastened to the frame at the location of a pivot point in a manner in which it is rotatable in a vertical plane, wherein the distance between the brush and the slide to the pivot point is adjustable. The pivot point can be located between the slide and the brush, so that increase of the pressure on the brush by the aforementioned setting can result in a decrease of the pressure of the slide on the floor, and vice versa.

There is also provided an unmanned self-propelled device for displacing material present on a floor, comprising a frame with a slide, wherein the frame is provided with at least one rotatable brush, wherein the frame is further provided with drive means for driving the rotatable brush, wherein the brush is mounted on the frame in such a manner that the operating pressure of the brush can be set, in particular by controlling the number of revolutions thereof.

There is also provided an unmanned self-propelled device for displacing material present on a floor, comprising a frame with a slide, wherein the frame is provided with at least one rotatable brush which is arranged behind the slide, wherein the frame is further provided with drive means for driving the rotatable brush, wherein the device has a longitudinal direction, to which the direction of travel of the device is parallel during operation, wherein the brush is drivable about a horizontal centre line which is transverse to the longitudinal direction.

The usability of the device according to the invention is enhanced if it is self-steering, not urged by fixed guide means.

From a further aspect, the invention provides a method of removing manure from a stable floor surface with the aid of a slide provided on an unmanned self-propelled device and at least one brush provided on said device, wherein the intensity of the contact of the brush with the floor is controlled automatically in dependence on one or more condition parameters, such as the condition of the floor and/or of the surroundings and/or of the travelling (speed and/or direction) of the device.

In an elaboration thereof, said intensity is controlled by setting the height of the brush with respect to the floor.

In another or additional elaboration thereof, said intensity is controlled by setting the part of the weight of the device which is supported on the floor via the brush.

In another or additional elaboration thereof, wherein the brush is a rotatingly driven brush, said intensity is controlled by setting the direction of rotation and/or the rotational speed of the brush.

In a first further development thereof, the brush is driven in rotation at a circumferential speed which is greater than the speed of travel, wherein the direction of rotation of the brush at the location of the contact of the brush with the floor is opposite to the direction of travel.

In a second further development thereof, the brush is driven in rotation at a circumferential speed which is equal to the speed of travel, wherein the direction of rotation of the brush at the location of the contact of the brush with the floor is opposite to the direction of travel.

In one embodiment of the method according to the invention, the device can move over the floor at a speed, in a selected one of two opposite directions of travel, and the brush can be driven in rotation in a direction in dependence on the selected direction of travel.

There is also provided a method of removing material from a stable floor surface with the aid of a slide which is provided on a mobile device and a brush provided on said device, wherein the operating pressure of the brush on the floor is set in dependence on the condition of the floor and/or the surroundings. By setting the pressure on the bristles it is possible to adapt to the condition on or at the floor, such as the formation behind the slide of a film which is difficult to remove, the floor being hot or cold, the extent to which the material adheres to the floor, et cetera. In a particular embodiment, the pressure of the slide on the floor and the pressure of the brush on the floor are set in mutual dependency, preferably according to inverse proportion, by which is meant that an increase of the pressure for the one results in a decrease of the pressure for the other.

In this case, use can be made of a brush which is rotatable about a substantially horizontal rotational centre line, preferably about a rotational centre line transverse to the direction of travel, preferably of a motor-driven brush.

The mobile device used in the above described methods can be unmanned self-propelled, in particular also self-steering.

It is observed that by unmanned self-propelled and possibly self-steering devices are meant both at least substantially autonomously travelling and possibly autonomously steering devices, whether or not programmed for this purpose, such as the Discovery (registered trademark) manure slide of the registered trademark Lely, and devices in which the travelling and/or steering are/is remotely controlled. In both cases, a motor for the travelling of the device is provided in the device.

The aspects and features described in this description and the claims of the application and/or shown in the figures of this application may, where possible, also be used separately from each other. These separate aspects may be the subject of divisional patent applications related thereto. This holds in particular for the features and aspects which are described per se in the dependent claims.

### BRIEF DESCRIPTION OF THE FIGURES

The invention will be explained with reference to a number of exemplary embodiments shown in the accompanying figures, in which:
Figures 1A and 1 B show a schematic side view and a top view, respectively, of a first exemplary embodiment of a device according to the invention, and
Figures 2A and 2B show a schematic side view and a top view, respectively, of a second exemplary embodiment of a device according to the invention.

### DETAILED DESCRIPTION OF THE FIGURES

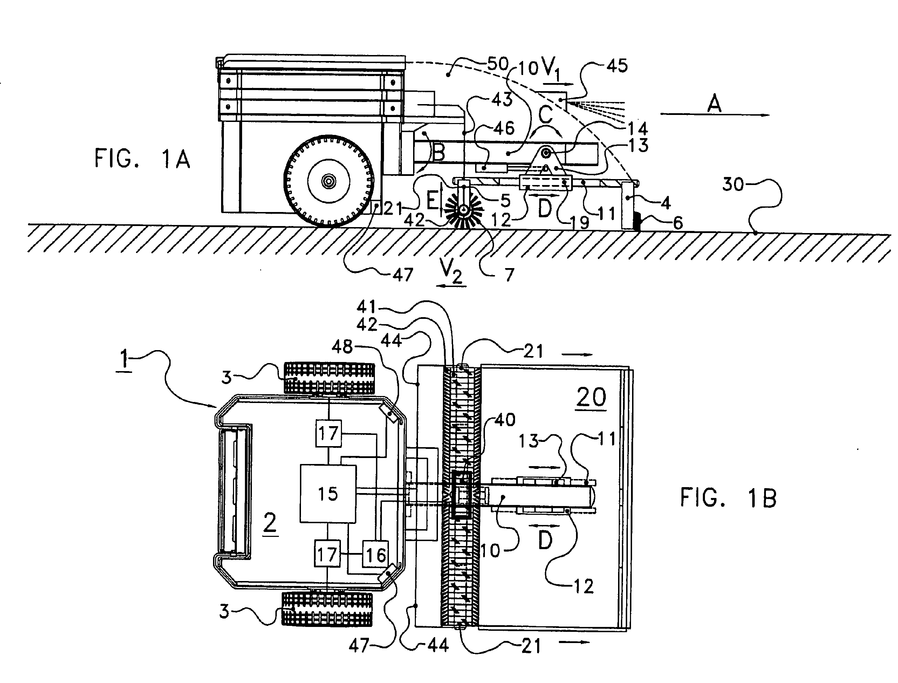

The device 1 shown in Figures 1A and 1 B for removing manure from a floor 30 of a passageway of a stable comprises a relatively heavy, block-shaped concrete housing 2 with two wheels 3 and a tandem arrangement, located below a hood 50, of a manure slide or scraper 4 and a brush member 5 which are interconnected by a steel plate 20 which is rigid against bending. The manure slide 4 and the brush member 5 form with the plate 20 a movable unit which is suspended from a longitudinal bar 10 which is itself fastened to the housing 2 and extends forwardly therefrom. The device 1 is supported on the floor 30 by means of the wheels 3, the manure slide 4 and the brush member 5. The housing 2 is provided on both sides with current collectors by means of which an accumulator 16, included in the housing 2, can be charged at an external charging station, as used in the manure slide device which is offered by Lely (registered trademark) under the name Discovery (registered trademark).

The housing 2 accommodates a control unit 15 which is fed by the accumulator 16 and which controls, via the control line 18, a double electric motor 17, by means of which the wheels 3 can be driven individually. The control unit 15 is capable of being programmed remotely, so that the device 1 can follow autonomously a defined working route, in a repeating manner.

The manure slide 4, which is concave in an alternative embodiment with the hollow side oriented forwardly, is made of stainless steel with a polyurethane strip 6 at the lower edge, for sweeping contact with the floor 30. The brush member 5 is provided with a rotatingly driven brush 7 by means of which a possible film-shaped dirt layer on the floor 30 can be detached and/or swept away. The longitudinal bar 10 is bearing-supported freely rotatably about its centre line in the housing 2, direction B, so that the unit of plate 20 and members 4 and 5 can adapt to the course of the floor 30 in a direction transverse to the direction of travel A. The plate 20 is provided with a slot 11 for receiving the vertical body of an H-shaped slide 19 which is fastened to an upright fork 13. The fork 13 is pivotably attached, by means of the pivot pin 14 in direction C, to the front end of the horizontal longitudinal bar 10. As a result thereof, the plate 20 with the members 4,5 is capable of tilting as a unit in the direction C, for following the floor 30. The slot 11 is longer than required for the slide 13, in order to be able to set the position of the pivot pin 14 with respect to the members 4,5 (direction D). The end of a piston rod of a cylinder 46, which is itself fastened to the lower side of the longitudinal bar 10, is mounted on the upper plate of the slide 19, extending between the legs of the fork 13. The cylinder is connected, by means of a non-shown line, to a pressure source and, by means of a non-shown line, to the control unit 15. By operating the cylinder 56, the slide 19 can be displaced with respect to the slot 11 and be positioned. As a result thereof, the pivot pin 14 can be positioned closer to the front member 4 than to the rear member 5, for example at approximately 1/3 of the mutual distance between the members 4 and 5. This makes it possible to influence the pressure with which the members 4 and 5, and consequently the brush 7, engage the floor during operation.

The brush 7, which is also shown in top view with omission of the plate 20 for illustrative reasons, is designed as a so-called drum brush with a horizontal rotational centre line transverse to the longitudinal direction or direction of travel A, wherein an electric motor 40 ensures the drive of a cylinder-shaped case 41 on which the brush bristles 42 are mounted, located within the case. For the current supply, there is provided a line 43 between the accumulator 16 and the motor 40. The motor 40 is controlled by the control unit 15 which also controls the double electric motor 17.

The brush 7 has its ends fastened, for example by means of spindle motors 21, in a height-adjustable manner to the marginal areas of the plate 20. The spindle motors 21 are connected via lines 44 to the control unit 15 and the accumulator 16. By operating the spindle motors 21 it is possible to set the position of the brush 7 with respect to the plate 20 (direction E) and to influence the brush pressure on the floor 30, in particular in an alternative embodiment in which the hinge connection 14 is absent.

On top, at the front, of the hood 50 there is provided a 3D sensor for recognizing manure spots on the stable floor 30. At the bottom, at the front, of the housing 2 there are provided a temperature sensor 47 and a moisture meter 48, which are connected via lines to the control unit 15. The data of these parameters for the surroundings, the temperature of the floor or the immediate surroundings and the moisture content can form an indication of the condition of a contaminated stable floor or the expected condition thereof. These detectors can also be provided in the stable as stationary ones and then transmit data in a wireless manner to the control unit 15.

The number of revolutions and the direction of rotation of the electric motor 40 can be controlled by the control unit 15. In one mode to be selected remotely, when travelling in the direction A, the brush 7 is rotated by the motor 40 in the direction F and, when travelling in opposite direction, in direction G. The control unit 15 can control the motor 40 in accordance with to the motors 17. It can thus be ensured that the circumferential speed V2 of the brush bristles 42 at the location of the contact with the floor 30 is equal to the speed of travel V1, in which case the brush 7 runs over the floor, or has, to a greater or smaller extent, a reduced contact with the floor, in order to be able to exercise a desired influence on the floor 30.

The control unit 15 can be programmed as regards one or more relations between number of revolutions of the brush 7 and speed of travel of the device 1. The user can remotely select the desired relation. The control of the number of revolutions of the brush in the control unit 15 can also be adapted to data from the temperature meter 47 and/or the moisture meter 48. The control unit 15 can also control the cylinder 45 and/or the spindle motors 21 according to a previously inputted connection between, on the one hand, brush height and/or brush pressure and, on the other hand, temperature and/or moisture content, as well as the presence, and possibly shape and dimensions in 3D and/or 2D, of manure spots. This makes it possible to adapt the intensity of the contact of the brush 7 with the floor 30 automatically and before and also during operation, attuned to the actual conditions. Another useful environment parameter can be the air pressure, for which purpose too a meter can be connected to the control unit 15. Connection can also take place by means of an internet connection.

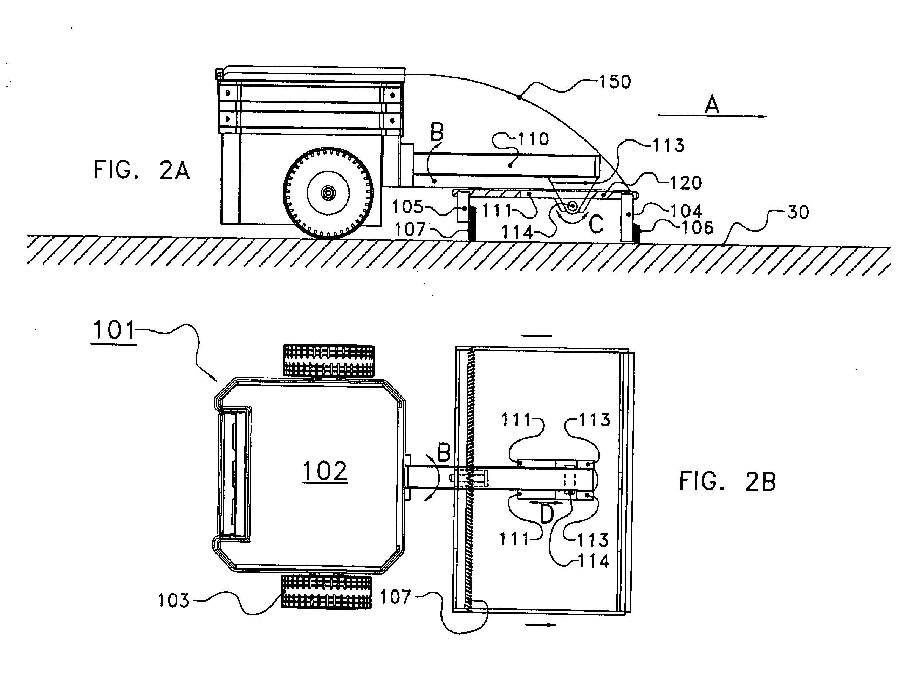

The device 101 shown in Figures 2A and 2B comprises a fixed brush 107 and a manure slide 104/106. The brush 107 is also shown in top view with omission of the plate 20 for illustrative reasons. The device 101 is supported on the floor 30 by means of the wheels 103, the brush 107 and the manure slide 104/106. A longitudinal bar 110, which is bearing-supported freely rotatably about its centre line, extends forwardly, direction B. The plate 120 is provided with two slots 111 for passage of the two plates of a fork 113 which is fixed to the front end of the horizontal longitudinal bar 110. By a pivot pin 114 located below the plate 120, the fork 113 is attached rotatably, in the direction C, to a downwardly extending plate 112 which is fastened to the lower side of the plate 120, so that the plate 120 with the members 104,105 can tilt in that direction as a unit in order to follow the floor 130. Owing to the low position of the rotational centre line, the arm of the moment of the force caused by manure and the floor against the slide 104 is limited. The slots 111, just like in the previous example, are longer than required for the fork 113, in order to be able to set the position of the pivot pin 114 with respect to the members 104,105 (direction D), by means of a non-shown cylinder, as is also possible in the embodiment of Figures 1A and 1B.

The embodiment of Figures 2A and 2B can be provided with sensors/detectors as can also be present in the embodiment of Figures 1A and 1B, in connection with the control unit 115. The brush 107 can also be set in height, for example by means of the aforementioned spindle motors, controlled by the control unit 115. The setting of the intensity of the contact of the brush 107 with the floor 30 is substantially comparable to the embodiment of Figures 1A and 1 B, with exception of the number of revolutions of the brush.

The above-mentioned description serves to illustrate the operation of preferred embodiments of the invention, and not to limit the scope of the invention. On the basis of the above-mentioned explanation, it will be obvious for a person skilled in the art that there are many variations falling within the scope of the present invention.

## Claims

1. Assembly for displacing manure present on a stable floor, comprising an unmanned self-propelled device having a frame (2,10), wherein the frame is provided with a slide for displacing the manure and with at least one brush (7), wherein the assembly further comprises setting means for automatically and selectively setting the intensity of the contact of the brush with the floor.

2. Assembly according to claim 1, wherein the setting means are configured to set the intensity of the contact of the brush with the floor in dependence on the condition of the floor and/or of the surroundings, in particular climate parameters, such as temperature, moisture and air pressure, and/or of the travelling, i.e. speed and/or direction, of the device.

3. Assembly according to claim 2, comprising one or more detectors for detecting one or more of said conditions.

4. Assembly according to claim 3, provided with a control unit which controls the setting means and which is provided with means for pre-programming the operation of the setting means in relation to the condition detected by the detectors.

5. Assembly according to claim 3 or 4, wherein the detector is configured to detect manure present on the floor, preferably in 2D or 3D form and/or dimensions.

6. Assembly according to claim 3 or 4, wherein the detector is configured to detect the temperature of the surface of the floor and/or of the space immediately above the floor.

7. Assembly according to claim 3 or 4, wherein the detector is configured to measure the moisture content on and/or above the floor.

8. Assembly according to any one of the preceding claims, wherein the brush is designed as a rotatable brush (7), wherein the device is provided with drive means (40) for driving the rotatable brush, wherein the setting means comprise control means (15) for the drive means for automatically and selectively controlling the number of revolutions and/or the direction of rotation of the brush.

9. Assembly according to claim 8, wherein the brush (7) has a substantially horizontal rotational centre line oriented transversely to the direction of travel of the device.

10. Assembly according to claim 9, wherein the control means (15) are configured to control the number of revolutions of the brush (7) in dependence on the speed of travel of the device.

11. Assembly according to claim 10, wherein the control means (15) are configured to control the number of revolutions of the brush (7) in such a manner that the circumferential speed at the lower side of the brush is equal to the speed of travel of the device but opposite in sign.

12. Assembly according to claim 10, wherein the control means (15) are configured to control the number of revolutions of the brush (7) in such a manner that the circumferential speed at the lower side of the brush differs from the speed of travel of the device, is preferably greater, and opposite in sign.

13. Assembly according to any one of claim 8-12, wherein the control means (15) are configured to control the direction of rotation of the brush in dependence on the direction of travel of the device.

14. Assembly according to any one of the preceding claims, wherein the setting means are configured to set the height of the brush with respect to the frame.

15. Assembly according to any one of the preceding claims, wherein the setting means are configured to set the pressure of the brush on the floor.

16. Assembly according to claim 15, wherein the brush is fastened to a holder (20) and is fastened thereby to the frame, wherein the holder is fastened to the frame at the location of an adjustable connection (13,14,19) which forms part of the setting means.

17. Assembly according to claim 16, wherein the adjustable connection forms a pivot point (14) with a substantially horizontal rotational centre line and is adjustable in horizontal direction for setting the distance between the brush and the pivot point.

18. Assembly according to any one of the preceding claims, wherein the brush is preferably arranged behind the slide when viewed in the direction of travel.

19. Assembly according to claim 18 and claim 16 or 17, wherein the slide (5) is fastened to the holder at a location at the side of the adjustable connection which faces away from the brush (7).

20. Assembly according to any one of the preceding claims, wherein the slide is concave in top view, with the hollow side oriented forwardly.

21. Device according to any one of the preceding claims, wherein the device is self-steering.

22. Method of removing manure from a stable floor surface with the aid of a slide provided on a mobile device and at least one brush provided on said device, wherein the intensity of the contact of the brush with the floor is controlled automatically in dependence on one or more condition parameters, such as the condition of the floor and/or of the surroundings and/or of the travelling, i.e speed and/or direction, of the device.

23. Method according to claim 22, wherein said intensity is controlled by setting the height of the brush with respect to the floor.

24. Method according to claim 22, wherein said intensity is controlled by setting the part of the weight of the device which is supported on the floor via the brush.

25. Method according to claim 22, wherein the brush is a rotatingly driven brush, wherein said intensity is controlled by setting the direction of rotation and/or the rotational speed of the brush.

26. Method according to claim 25, wherein the device travels over the floor at a speed and the brush is driven in rotation at least partially in dependence on the speed of travel.

27. Method according to claim 26, wherein the brush is driven in rotation at a circumferential speed which is greater than the speed of travel, wherein the direction of rotation of the brush at the location of the contact of the brush with the floor is opposite to the direction of travel.

28. Method according to claim 26, wherein the brush is driven in rotation at a circumferential speed which is equal to the speed of travel, wherein the direction of rotation of the brush at the location of the contact of the brush with the floor is opposite to the direction of travel.

29. Method according to claim 26, 27 or 28, wherein the device travels over the floor at a speed, in a selected one of two opposite directions of travel, and the brush is driven in rotation in a direction in dependence on the selected direction of travel.

## Patentansprüche

1. Einrichtung zur Entfernung von auf einem Stallboden liegenden Dung, umfassend eine unbemannte, selbstfahrende Vorrichtung mit einem Rahmen (2, 10), wobei der Rahmen mit einem Schieber zum Entfernen des Dungs und mit wenigstens einer Bürste (7) ausgestattet ist, wobei die Einrichtung des Weiteren Einstellmittel zum automatischen und ausgewählten Einstellen der Intensität des Kontakts der Bürste mit dem Boden umfasst.

2. Einrichtung nach Anspruch 1,
wobei die Einstellmittel so konfiguriert sind, um die Intensität des Kontakts der Bürste mit dem Boden in Abhängigkeit vom Zustand des Bodens und/oder der Umgebungen, insbesondere von Klimaparametern wie Temperatur, Feuchtigkeit und Luftdruck, und/oder der Fahrbewegung, d. h. Geschwindigkeit und/oder Richtung, der Vorrichtung einzustellen.

3. Einrichtung nach Anspruch 2,
umfassend einen oder mehrere Detektoren zum Erfassen einer oder mehrerer dieser Zustände.

4. Einrichtung nach Anspruch 3,
ausgestattet mit einer Steuereinheit, welche die Einstellmittel steuert und welche mit Mitteln zum Vorprogrammieren des Betriebs der Einstellmittel in Bezug auf den Zustand, welcher durch die Detektoren erfasst wird, ausgestattet ist.

5. Einrichtung nach Anspruch 3 oder 4,
wobei der Detektor konfiguriert ist, um auf dem Boden vorhandenen Dung vorzugsweise in 2D- oder 3D-Form und/oder Abmessungen zu erfassen.

6. Einrichtung nach Anspruch 3 oder 4,
wobei der Detektor konfiguriert ist, um die Temperatur der Oberfläche des Bodens und/oder des Raums unmittelbar über dem Boden zu erfassen.

7. Einrichtung nach Anspruch 3 oder 4,
wobei der Detektor konfiguriert ist, um den Feuchtigkeitsgehalt auf und/oder über dem Boden zu messen.

8. Einrichtung nach einem der vorhergehenden Ansprüche,
wobei die Bürste als eine drehbare Bürste (7) gestaltet ist, wobei die Vorrichtung mit Antriebsmitteln (40) zum Antreiben der drehbaren Bürste ausgestattet ist, wobei die Einstellmittel Steuermittel (15) für die Antriebsmittel zum automatischen und ausgewählten Steuern der Umdrehungszahl und/oder der Drehrichtung der Bürste umfassen.

9. Einrichtung nach Anspruch 8,
wobei die Bürste (7) eine im Wesentlichen horizontale Rotationsmittellinie aufweist, welche quer zur Fahrtrichtung der Vorrichtung ausgerichtet ist.

10. Einrichtung nach Anspruch 9,
wobei die Steuermittel (15) so konfiguriert sind, um die Anzahl der Umdrehungen der Bürste (7) in Abhängigkeit von der Fahrgeschwindigkeit der Vorrichtung zu steuern.

11. Einrichtung nach Anspruch 10,
wobei die Steuermittel (15) so konfiguriert sind, um die Anzahl der Umdrehungen der Bürste (7) auf solch eine Weise zu steuern, dass die Umfangsgeschwindigkeit auf der unteren Seite der Bürste gleich der Fahrgeschwindigkeit der Vorrichtung ist, aber mit negativem Vorzeichen zu dieser.

12. Einrichtung nach Anspruch 10,
wobei die Steuermittel (15) so konfiguriert sind, um die Anzahl der Umdrehungen der Bürste (7) auf solch eine Weise zu steuern, dass die Umfangsgeschwindigkeit auf der unteren Seite der Bürste sich von der Fahrgeschwindigkeit der Vorrichtung unterscheidet, vorzugsweise größer ist, aber mit negativem Vorzeichen zu dieser.

13. Einrichtung nach einem der Ansprüche 8 bis 12,
wobei die Steuermittel (15) so konfiguriert sind, um die Rotationsrichtung der Bürste in Abhängigkeit zur Fahrtrichtung der Vorrichtung zu steuern.

14. Einrichtung nach einem der vorhergehenden Ansprüche,
wobei die Einstellmittel so konfiguriert sind, um die Höhe der Bürste in Bezug auf den Rahmen einzustellen.

15. Einrichtung nach einem der vorhergehenden Ansprüche,
wobei die Einstellmittel so konfiguriert sind, um den Druck der Bürste auf den Boden einzustellen.

16. Einrichtung nach Anspruch 15,
wobei die Bürste an einem Halter (20) und dadurch am Rahmen befestigt ist, wobei der Halter am Rahmen am Ort einer einstellbaren Verbindung (13, 14, 19) befestigt ist, welche einen Teil der Einstellmittel bildet.

17. Einrichtung nach Anspruch 16,
wobei die einstellbare Verbindung einen Drehpunkt (14) mit einer im Wesentlichen horizontalen Rotationsmittellinie ausbildet und in horizontaler Richtung zum Einstellen des Abstands zwischen der Bürste und dem Drehpunkt einstellbar ist.

18. Einrichtung nach einem der vorhergehenden Ansprüche,
wobei die Bürste vorzugsweise, wenn in der Fahrtrichtung betrachtet, hinter dem Schieber angeordnet ist.

19. Einrichtung nach Anspruch 18 und Anspruch 16 oder 17,
wobei der Schieber (5) am Halter an einem Ort an der Seite der einstellbaren Verbindung befestigt ist, welche von der Bürste (7) abgewandt ist.

20. Einrichtung nach einem der vorhergehenden Ansprüche,
wobei der Schieber in der Draufsicht konkav mit der hohlen Seite nach vorne ausgerichtet ist.

21. Einrichtung nach einem der vorhergehenden Ansprüche,
wobei die Vorrichtung selbststeuernd ist.

22. Verfahren zum Entfernen von Dung von einer Stallbodenoberfläche mit Hilfe eines Schiebers, welcher auf einer bewegbaren Vorrichtung angeordnet ist, und wenigstens einer Bürste, welche auf der Vorrichtung vorgesehen ist, wobei die Intensität des Kontakts der Bürste mit dem Boden automatisch in Abhängigkeit mit einem oder mehreren Zustandsparametern wie dem Zustand des Bodens und/oder der Umgebungen und/oder der Bewegung, d. h. Geschwindigkeit und/oder Richtung, der Vorrichtung gesteuert wird.

23. Verfahren nach Anspruch 22,
wobei die Intensität durch Einstellen der Höhe der Bürste in Bezug auf den Boden gesteuert wird.

24. Verfahren nach Anspruch 22,
wobei die Intensität durch Einstellen des Teils des Gewichts der Vorrichtung, welcher auf dem Boden durch die Bürste getragen wird, gesteuert wird.

25. Verfahren nach Anspruch 22,
wobei die Bürste eine rotierend angetriebene Bürste ist, wobei die Intensität durch Einstellen der Rotationsrichtung und/oder der Umdrehungszahl der Bürste gesteuert wird.

26. Verfahren nach Anspruch 25,
wobei die Vorrichtung über den Boden mit einer Geschwindigkeit fährt und die Bürste in Rotation wenigstens teilweise in Abhängigkeit von der Fahrgeschwindigkeit angetrieben wird.

27. Verfahren nach Anspruch 26,
wobei die Bürste in Rotation mit einer Umfangsgeschwindigkeit angetrieben wird, welche größer ist als die Fahrgeschwindigkeit, wobei die Rotationsrichtung der Bürste an der Stelle des Kontakts der Bürste mit dem Boden entgegengesetzt der Fahrtrichtung ist.

28. Verfahren nach Anspruch 26,
wobei die Bürste in Rotation mit einer Umfangsgeschwindigkeit angetrieben wird, welche gleich ist der Fahrgeschwindigkeit, wobei die Rotationsrichtung der Bürste an der Stelle des Kontakts der Bürste mit dem Boden entgegengesetzt der Fahrtrichtung ist.

29. Verfahren nach Anspruch 26, 27 oder 28,
wobei die Vorrichtung über den Boden mit einer Geschwindigkeit in einer ausgewählten von zwei einander entgegengesetzten Fahrtrichtungen fährt und die Bürste in einer Richtung in Abhängigkeit von der ausgewählten Fahrtrichtung rotierend angetrieben wird.

## Revendications

1. Ensemble pour déplacer du fumier présent sur un sol stable, comprenant un dispositif automoteur sans pilote comportant un cadre (2, 10), dans lequel le cadre est pourvu d'une glissière pour déplacer le fumier et d'au moins une brosse (7), dans lequel l'ensemble comprend en outre des moyens de réglage pour régler automatiquement et sélectivement l'intensité du contact de la brosse avec le sol.

2. Ensemble selon la revendication 1, dans lequel les moyens de réglage sont configurés pour régler l'intensité du contact de la brosse avec le sol en fonction de la condition du sol et/ou des environs, en particulier des paramètres climatiques, tels que la température, l'humidité et la pression de l'air, et/ou du déplacement, à savoir la vitesse et/ou la direction, du dispositif.

3. Ensemble selon la revendication 2, comprenant un ou plusieurs détecteurs pour détecter une ou plusieurs desdites conditions.

4. Ensemble selon la revendication 3, pourvu d'une unité de commande qui commande les moyens de réglage et qui est pourvue de moyens pour préprogrammer le fonctionnement des moyens de réglage par rapport à la condition détectée par les détecteurs.

5. Ensemble selon la revendication 3 ou 4, dans lequel le détecteur est configuré pour détecter du fumier présent sur le sol, de préférence sous forme et/ou dans des dimensions 2D ou 3D.

6. Ensemble selon la revendication 3 ou 4, dans lequel le détecteur est configuré pour détecter la température de la surface du sol et/ou de l'espace immédiatement au-dessus du sol.

7. Ensemble selon la revendication 3 ou 4, dans lequel le détecteur est configuré pour mesurer la teneur en humidité sur et/ou au-dessus du sol.

8. Ensemble selon l'une quelconque des revendications précédentes, dans lequel la brosse est conçue sous forme de brosse rotative (7), dans lequel le dispositif est pourvu de moyens d'entraînement (40) pour entraîner la brosse rotative, dans lequel les moyens de réglage comprennent des moyens de commande (15) pour les moyens d'entraînement pour commander automatiquement et sélectivement le nombre de révolutions et/ou la direction de rotation de la brosse.

9. Ensemble selon la revendication 8, dans lequel la brosse (7) comporte une ligne centrale de rotation sensiblement horizontale orientée transversalement à la direction de déplacement du dispositif.

10. Ensemble selon la revendication 9, dans lequel les moyens de commande (15) sont configurés pour commander le nombre de révolutions de la brosse (7) en fonction de la vitesse de déplacement du dispositif.

11. Ensemble selon la revendication 10, dans lequel les moyens de commande (15) sont configurés pour commander le nombre de révolutions de la brosse (7) de manière telle que la vitesse circonférentielle sur le côté inférieur de la brosse soit égale à la vitesse de déplacement du dispositif mais de signe opposé.

12. Ensemble selon la revendication 10, dans lequel les moyens de commande (15) sont configurés pour commander le nombre de révolutions de la brosse (7) de manière telle que la vitesse circonférentielle sur le côté inférieur de la brosse diffère de la vitesse de déplacement du dispositif, soit de préférence supérieure, et de signe opposé.

13. Ensemble selon l'une quelconque des revendications 8 à 12, dans lequel les moyens de commande (15) sont configurés pour commander la direction de rotation de la brosse en fonction de la direction de déplacement du dispositif.

14. Ensemble selon l'une quelconque des revendications précédentes, dans lequel les moyens de réglage sont configurés pour régler la hauteur de la brosse par rapport au cadre.

15. Ensemble selon l'une quelconque des revendications précédentes, dans lequel les moyens de réglage sont configurés pour régler la pression de la brosse sur le sol.

16. Ensemble selon la revendication 15, dans lequel la brosse est fixée à un support (20) et est fixée par celui-ci au cadre, dans lequel le support est fixé au cadre à l'emplacement d'un raccord réglable (13, 14, 19) qui fait partie des moyens de réglage.

17. Ensemble selon la revendication 16, dans lequel le raccord réglable forme un point de pivotement (14) avec une ligne centrale de rotation sensiblement horizontale et est réglable dans la direction horizontale pour régler la distance entre la brosse et le point de pivotement.

18. Ensemble selon l'une quelconque des revendications précédentes, dans lequel la brosse est de préférence agencée derrière la glissière en vue dans la direction de déplacement.

19. Ensemble selon la revendication 18 et la revendication 16 ou 17, dans lequel la glissière (5) est fixée au support dans un emplacement sur le côté du raccord réglable qui n'est pas orienté vers la brosse (7).

20. Ensemble selon l'une quelconque des revendications précédentes, dans lequel la glissière est concave en vue de dessus, avec le côté creux orienté vers l'avant.

21. Dispositif selon l'une quelconque des revendications précédentes, dans lequel le dispositif est autoguidé.

22. Procédé pour ôter du fumier à partir d'une surface de sol stable à l'aide d'une glissière prévue sur un dispositif mobile et au moins une brosse prévue sur ledit dispositif, dans lequel l'intensité du contact de la brosse avec le sol est commandée automatiquement en fonction d'un ou de plusieurs paramètres de condition, tels que la condition du sol et/ou des environs et/ou du déplacement, à savoir la vitesse et/ou la direction, du dispositif.

23. Procédé selon la revendication 22, dans lequel ladite intensité est commandée en réglant la hauteur de la brosse par rapport au sol.

24. Procédé selon la revendication 22, dans lequel ladite intensité est commandée en réglant la partie du poids du dispositif qui est supportée sur le sol par l'intermédiaire de la brosse.

25. Procédé selon la revendication 22, dans lequel la brosse est une brosse entraînée en rotation, dans lequel ladite intensité est commandée en réglant la direction de rotation et/ou la vitesse de rotation de la brosse.

26. Procédé selon la revendication 25, dans lequel le dispositif se déplace sur le sol à une vitesse et la brosse est entraînée en rotation au moins partiellement en fonction de la vitesse de déplacement.

27. Procédé selon la revendication 26, dans lequel la brosse est entraînée en rotation à une vitesse circonférentielle qui est supérieure à la vitesse de déplacement, dans lequel la direction de rotation de la brosse sur le lieu de contact de la brosse avec le sol est opposée à la direction de déplacement.

28. Procédé selon la revendication 26, dans lequel la brosse est entraînée en rotation à une vitesse circonférentielle qui est égale à la vitesse de déplacement, dans lequel la direction de rotation de la brosse sur le lieu de contact de la brosse avec le sol est opposée à la direction de déplacement.

29. Procédé selon la revendication 26, 27 ou 28, dans lequel le dispositif se déplace sur le sol à une vitesse, dans une direction sélectionnée parmi deux directions opposées de déplacement, et la brosse est entraînée en rotation dans une direction en fonction de la direction sélectionnée de déplacement.
